(19) Europäisches Patentamt / European Patent Office / Office européen des brevets

(11) **EP 4 401 332 A1**

(12) **EUROPEAN PATENT APPLICATION**
published in accordance with Art. 153(4) EPC

(43) Date of publication:
**17.07.2024 Bulletin 2024/29**

(21) Application number: **22866582.4**

(22) Date of filing: **06.09.2022**

(51) International Patent Classification (IPC):
**H04B 7/06** (2006.01)

(52) Cooperative Patent Classification (CPC):
**H04B 7/06**

(86) International application number:
**PCT/CN2022/117221**

(87) International publication number:
**WO 2023/036119 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2021 CN 202111043416**

(71) Applicant: **ZTE Corporation**
**Shenzhen, Guangdong 518057 (CN)**

(72) Inventors:
• **XIAO, Huahua**
**Shenzhen, Guangdong 518057 (CN)**

• **LU, Zhaohua**
**Shenzhen, Guangdong 518057 (CN)**
• **JIANG, Chuangxin**
**Shenzhen, Guangdong 518057 (CN)**
• **LI, Lun**
**Shenzhen, Guangdong 518057 (CN)**
• **WU, Hao**
**Shenzhen, Guangdong 518057 (CN)**

(74) Representative: **Ipsilon**
**Le Centralis**
**63, avenue du Général Leclerc**
**92340 Bourg-la-Reine (FR)**

(54) **FEEDBACK METHOD FOR CHANNEL STATE INFORMATION, METHOD FOR PROCESSING FEEDBACK INFORMATION, TERMINAL, BASE STATION AND COMPUTER-READABLE STORAGE MEDIUM**

(57) The present disclosure provides a method for feeding back channel state information, including: performing sampling on initial channel information to obtain check information; and feeding back the check information. The present disclosure further provides a method for processing feedback information, a terminal, a base station, a computer-readable storage medium.

FIG. 1

**Description**

CROSS-REFERENCE TO RELATED APPLICATIONS

The present disclosure claims the priority of Chinese Patent Application No. 202111043416.8, filed on September 7, 2021, the contents of which are incorporated herein in their entirety by reference.

TECHNICAL FIELD

The present disclosure relates to the field of communication technologies, and in particular, to a method for feeding back channel state information, a method for processing feedback information, a terminal, a base station and a computer-readable storage medium.

BACKGROUND

For a long time, multi-antenna technology is one of key technologies for improving frequency spectrum of wireless communication technologies, and is widely applied to fourth-generation and fifth-generation wireless communication technologies, and may also be applied to future wireless communication technologies.

In order to improve performance of a wireless communication system by the multi-antenna technology, a terminal is expected to feed channel state information (CSI) back to the base station, the CSI includes, but is not limited to, information such as rank, precoding matrix, or vector of a wireless channel.

In order to reduce feedback overhead, an artificial intelligence (AI)-based CSI feedback technology has emerged.

However, there are cases where the performance of the communication system is degraded in some scenarios using the AI-based CSI feedback technology.

SUMMARY

As a first aspect of the present disclosure, there is provided a method for feeding back channel state information, including: performing sampling on initial channel information to obtain check information; and feeding back the check information.

As a second aspect of the present disclosure, there is provided a method for processing feedback information, including: receiving check information; receiving first type codebook information; performing processing on the first type codebook information to obtain verification information corresponding to the check information; and determining a network performance identifier according to the verification information and the check information.

As a third aspect of the present disclosure, there is provided a terminal, including: at least one processor; a memory having at least one computer program stored thereon, the at least one computer program, executed by the at least one processor, causes the at least one processor to implement the method for feeding back channel state information according to the first aspect of the present disclosure; and at least one I/O interface connected between the processor and the memory, and configured to implement information interaction between the processor and the memory.

As a fourth aspect of the present disclosure, there is provided a base station, including: at least one processor; a memory having at least one computer program stored thereon, the at least one computer program, executed by the at least one processor, causes the at least one processor to implement the method for processing feedback information according to the second aspect of the present disclosure; and at least one I/O interface connected between the processor and the memory, and configured to implement information interaction between the processor and the memory.

As a fifth aspect of the present disclosure, there is provided a computer-readable storage medium having a computer program stored thereon, the computer program, executed by a processor, causes the processor to perform at least one of: the method for feeding back channel state information according to the first aspect of the present disclosure; or the method for processing feedback information according to the second aspect of the present disclosure.

BRIEF DESCRIPTION OF DRAWINGS

Fig. 1 is a flowchart illustrating an implementation of a method for feeding back channel state information according to the present disclosure;
Fig. 2 is a schematic block diagram of a communication system including a terminal and a base station according to the present disclosure;

Fig. 3 is a flowchart illustrating an implementation of a method for feeding back channel state information according to the present disclosure;

Fig. 4 is a schematic diagram of an implementation of an operation S110 in a method for feeding back channel state information according to the present disclosure;

Fig. 5 is a flowchart illustrating an implementation of a method for feeding back channel state information according to the present disclosure;

Fig. 6 is a flowchart illustrating an implementation of a method for processing feedback information according to the present disclosure;

Fig. 7 is a schematic diagram of an implementation of an operation S230 in a method for processing feedback information according to the present disclosure;

Fig. 8 is a flowchart illustrating an implementation of a method for processing feedback information according to the present disclosure;

Fig. 9 is a schematic block diagram of an implementation of a terminal according to the present disclosure;

Fig. 10 is a schematic block diagram of an implementation of a base station according to the present disclosure;

Fig. 11 is a schematic diagram of an implementation of a computer-readable storage medium according to the present disclosure;

Fig. 12 is a schematic block diagram of an implementation of a terminal according to the present disclosure; and

Fig. 13 is a schematic block diagram of an implementation of a base station according to the present disclosure.

## DETAIL DESCRIPTION OF EMBODIMENTS

In order to make those skilled in the art better understand the technical solutions of the present disclosure, a method for feeding back channel state information, a method for processing feedback information, a terminal, a base station and a computer-readable storage medium, are described in detail below with reference to the accompanying drawings.

Exemplary embodiments are described in detail below with reference to the accompanying drawings, but the present disclosure may be embodied in different forms, and should not be construed as limited to the embodiments set forth herein. The embodiments are illustrated to make the present disclosure more thorough and complete, and for those skilled in the art more fully understanding the scope of the present disclosure.

The embodiments of the present disclosure and the technical features in the embodiments may be combined with each other if no conflict is incurred.

As used herein, a term "and/or" includes any and all combinations of at least one of listed items.

The terms used in the present disclosure are for a purpose of describing particular embodiments only, and are not intended to limit the present disclosure. As used in the present disclosure, singular forms "a" and "the" are intended to include plural forms as well, i.e., to represent at least one, unless the context clearly defines otherwise. It should further be understood that terms "includes/comprises" and/or "made of/consisted of" in the present disclosure are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skill in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

In some related arts, reasons for the cases where the performance of the communication system is degraded in some scenarios using the AI-based CSI feedback technology include, but are not limited to: the AI-based CSI feedback technology relies on training data, and neural network parameters trained in some scenarios may cause performance degradation in other scenarios, and the performance degradation may cause a relatively large degradation of system performance, which is not known to the base station, and thus, if the base station uses poor CSI for data transmission, performance degradation of the wireless communication system is thereby caused.

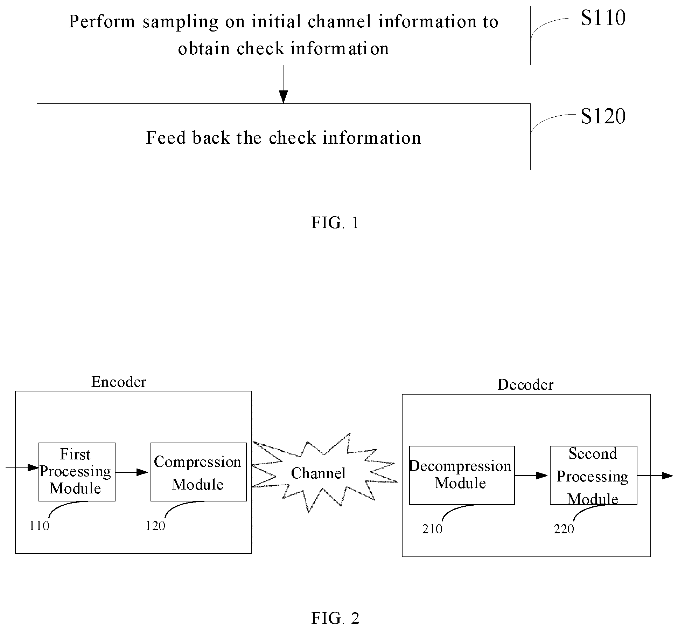

As a first aspect of the present disclosure, there is provided a method for feeding back channel state information, and as shown in Fig. 1, the method includes following operations S 110 and S 120.

At operation S110, performing sampling on initial channel information to obtain check information.

At operation S120, feeding back the check information.

The method for feeding back channel state information provided in the present disclosure is performed by a terminal. It should be noted that the terminal not only feeds back the check information, but also feeds back the channel state information obtained according to the initial channel information. The channel state information is information obtained by encoding initial channel information through a preset codebook (e.g., a neural network, a type I codebook, a type II codebook, an etype II codebook, etc.), and the check information is not encoded through the preset codebook. The codebook type of the preset codebook in the channel state information includes a first-type codebook and a second-type codebook, the first-type codebook may be a codebook mapped based on the neural network, for example, the initial channel state information is compressed precoded information output by a module on the terminal through the neural network, an artificial intelligence network or machine learning. The second-type codebook is based on a currently common discrete Fourier vector (DFT)-based codebook, such as type I codebook, type II codebook, etype II codebook in NR, various discrete Fourier vector-based codebooks defined in LTE, and the like.

The terminal feeds back the check information obtained by sampling the initial channel information to the base station, correspondingly, the base station checks the channel state information fed back by the terminal by using the check information after obtaining the check information to obtain a check result, and may determine whether a codebook encoding the initial channel information is suitable for a current application scene according to the check result.

How the base station checks the channel state information by using the check information is described as follows.

After receiving the channel state information fed back by the terminal, the base station decodes the channel state information to obtain decoded information. The check information is information obtained by sampling from the initial channel information, after receiving the check information, the base station searches for information (for convenience of description, referred to as verification information) corresponding to the check information in the decoded information, then compares the verification information with the check information to obtain a comparison result, and determines whether the preset codebook is applicable to a current application scenario according to the comparison result.

In some implementations, if a similarity between the verification information and the check information is relatively high (or a distance between the verification information and the check information is relatively small), it indicates that a preset encoding mode for encoding the initial channel information performed at the terminal, can meet the current application scenario. If the similarity between the verification information and the check information is relatively low (or the distance therebetween is relatively large), it indicates that the preset encoding mode for encoding the initial channel information performed at the terminal, cannot meet the current application scenario.

If the base station determines that the codebook for encoding the initial channel information at the terminal, cannot meet the current application scenario, the base station may send reminding information to the terminal to remind the terminal to replace the codebook for encoding the initial channel information. That is, through the method for feeding back channel state information provided in the present disclosure, the terminal can select a processing mode suitable for the current scenario, so as to encode the initial channel information and feed the encoded initial channel information back to the base station, and finally the communication system maintains relatively high performance.

In the present disclosure, the form and content of the initial channel information are not particularly limited. In some implementations, the initial channel information may be channel information H received by the terminal and obtained through a channel state information reference signal (CSI-RS) sent by the base station, H being a complex matrix of Nr*Nt*Nc*Nf. Nr is a receiving antenna, Nt is a transmit antenna, Nc is the number of subcarriers (or parameters such as the number of physical resource blocks and the number of subbands), Nf is the number of time-domain symbols, and the time-domain symbols may be any one of Orthogonal Frequency Division Multiplexing (OFDM) symbols, Orthogonal Frequency Division Multiple Access (OFDMA) symbols, Single-Carrier Frequency Division Multiple Access (SC-FDMA) symbols, and the like. Nr, Nt, Nc, and Nf are positive integers, and Nf may be equal to 1, that is, in one physical resource block, each antenna has only one value.

In some implementations, the initial channel information may be obtained by the terminal preprocessing the channel information H. In the present disclosure, the manner of preprocessing is not particularly limited, as long as a dimension of H1 corresponds to an input dimension of an encoder for encoding and generating a corresponding codebook. For example, the preprocessing includes, but is not limited to, performing following processing on the channel information H: a line-domain transformation (e.g., transformation of time-domain to frequency-domain or transformation of frequency-domain to time-domain, transformation of angle-domain to spatial-domain, or transformation of spatial-domain to angular-domain), downsampling, zero-filling, grouping, truncating.

In the present disclosure, how to obtain the channel state information according to the initial channel information is not particularly limited. In some implementations, the initial channel information may be encoded using a selected codebook; in some implementations, the initial channel information may be processed by using an encoder.

In some implementations, as shown in Fig. 2, the encoder may include a first processing module 110 and a compression module 120. In the implementations, the first processing module 110 may include a preset neural network including C network layers, and each of the network layers may be selected from any one of a fully-connected layer, a convolution layer, a pooling layer, a direct connection layer, an activation function, and a batch normalization layer. The compression module 120 may include a fully-connected layer, may also include C1 convolutional layers (or a plurality of residual blocks (resblocks), or a plurality of dense blocks (denseblocks)), or the compression module 120 may also be a recurrent network (e.g., a long short-term memory (LSTM), a gated recurrent neural network (GRU)). Correspondingly, a decoder corresponding to the encoder of the terminal may be set in the base station, the decoder includes a decompression module 210 and a second processing module 220, the second processing module 220 is also a neural network including L network layers, the i-th layer may be a convolutional layer, a pooling layer, a direct connection layer, or any combination of the above network layers, or a residual network block and a dense block formed by several convolutional layers. The decompression module 220 includes any one of a fully-connected layer, C2 deconvolution layers (e.g., upsampling layers, transposed convolution layers, and combinations of the two network layers and various resblocks, denseblocks, convolution layers described above), LSTM, GRU.

In some implementations, the terminal may also quantize, encode, and modulate the channel state information to transmit to the base station. The base station may dequantize, demodulate, and decode the channel state information as an input of the decoder after receiving the channel state information, and the decoder outputs the channel information.

Through the method for feeding back channel state information, the base station can determine whether an encoding mode selected by the terminal is suitable for the current application scenario.

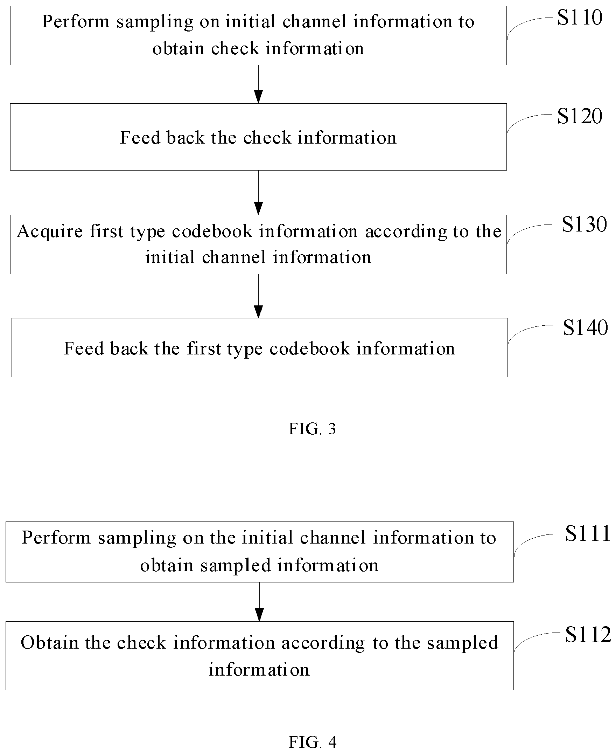

In the present disclosure, the method for feeding back channel state information may be used for feeding back the check information only, and the channel state information may be fed back by other manners. Certainly, the present disclosure is not limited thereto, and in order to save feedback resources, in some implementations, the method for feeding back channel state information may also include feeding back the channel state information. Accordingly, as shown in Fig. 3, the method for feeding back channel state information may further include following operations S130 and S140.

At operation S130, acquiring first type codebook information according to the initial channel information.

At operation S140, feeding back the first type codebook information.

In the present disclosure, the first type codebook information is an implementation of the channel state information described above. The first type codebook information is information obtained by performing encoding on the initial channel information through the first-type codebook. In the present disclosure, an execution sequence of operations S110 and S130 is not particularly limited, for example, operation S110 may be executed first and then operation S130 may be executed, operation S130 may be executed first and then operation S110 may be executed, or operation S110 and operation S130 may be executed simultaneously.

Likewise, in the present disclosure, an execution sequence of operations S120 and S140 is not particularly limited. For example, operation S120 may be executed first and then operation S140 may be executed, operation S140 may be executed first and then operation S120 may be executed, or operation S120 and operation S140 may be executed simultaneously.

In some implementations, in a case where operation S120 and operation S140 are executed simultaneously, operation S120 and operation S140 are executed as: performing joint encoding on the check information and the first type codebook information in the same coding block to obtain joint encoded information; and feeding back the joint encoded information.

The method for feeding back channel state information provided in the present disclosure is mainly directed to feeding back the check information, so that, in some implementations, a feedback priority of the check information is not higher than a feedback priority of the first type codebook information, the check information can be received by the base station.

Certainly, the present disclosure is not limited thereto, and in some implementations, in a case where feedback resources are insufficient, only the first type codebook information may be fed back without feeding back the check information, and in a case where the feedback resources are sufficient, the check information may be fed back. By feeding back information to the base station in such way, the channel state information can be ensured to be received by the base station.

It should be noted that, in the present disclosure, the check information may be fed back according to a first period, and the first type codebook information may be fed back according to a second period.

In order to reduce energy consumption and save feedback resources, in some implementations, the second period for feeding back the check information is less than the first period for feeding back the first type codebook information.

In the present disclosure, how the initial channel information is sampled is not limited thereto. In some implementations, the performing sampling on initial channel information includes at least one of: performing sampling on the initial channel information at a port; performing sampling on the initial channel information at a data stream; performing sampling on the initial channel information at a subcarrier; performing sampling on the initial channel information at a physical resource block; performing sampling on the initial channel information at a time-domain sample point; or performing sampling on the initial channel information at a beam..

During performing sampling on the initial channel information on at least one beam, a direction of the beam includes at least one of followings: a DFT vector, a precoding vector, an azimuthal angle, a pitch angle, a type I codebook, a type II codebook, an etype II codebook, a beam coefficient of the type II codebook, a beam coefficient of the etype II codebook.

In the present disclosure, how to perform operation S110 of performing sampling on initial channel information to obtain check information is not particularly limited. In some implementations, as shown in Fig. 4, operation S110 may include following operations S111 and S 112.

At operation S111, performing sampling on the initial channel information to obtain sampled information.

At operation S112, obtaining the check information according to the sampled information.

Accordingly, operation S112 may include at least one of: the check information corresponding to the sampled information of the initial channel information on at least one port; the check information corresponding to the sampled information of the initial channel information on at least one data stream; the check information corresponding to the sampled information of the initial channel information on at least one subcarrier; the check information corresponding to the sampled information of the initial channel information on at least one physical resource block; the check information corresponding to the sampled information of the initial channel information on at least one time-domain sample point; or the check information corresponding to the sampled information of the initial channel information on at least one beam.

Moreover, the obtaining the check information according to the sampled information includes, but is not limited to, that quantization processing is performed on the sampled information to obtain the check information, or the sampled information is the check information, or the sampled information is mapped to the second-type codebook to obtain the check information.

In the present disclosure, how to determine the verification information corresponding to the check information at the base station is not particularly limited. In some implementations, before feeding back the check information, a location of the verification information in the decoded initial channel information (i.e., the decoded information described above) may be agreed with the base station.

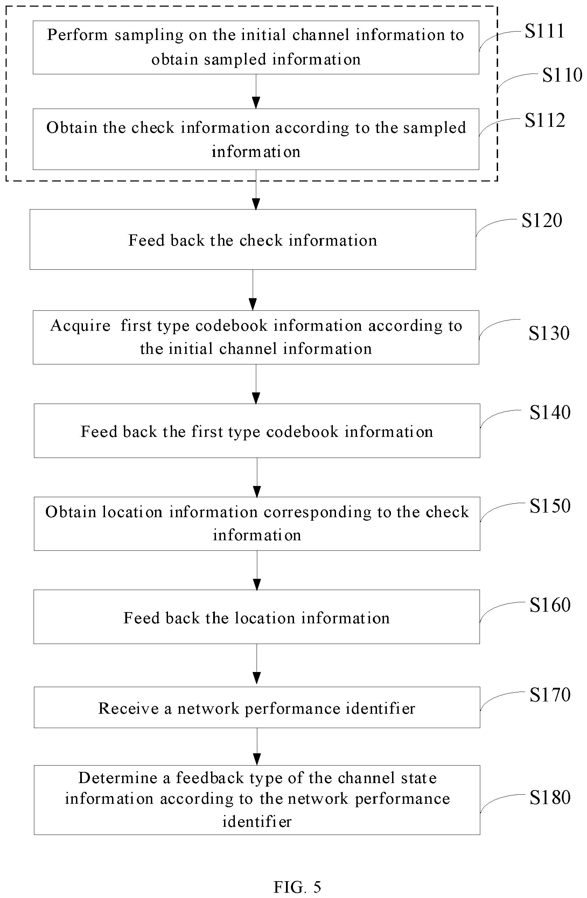

In order to improve the applicability of the method for feeding back channel state information, in some implementations, in the method for feeding back channel state information, the location information of the check information may also be fed back simultaneously. That is, as shown in Fig. 5, the method for feeding back channel state information may further include following operations A150 and S160.

At operation S150, obtaining location information corresponding to the check information.

At operation S160, feeding back the location information.

After decoding the received channel state information at the base station, the channel state information with the location information fed back is used as the verification information, and a corresponding comparison result can be obtained by comparing the verification information with the check information.

In the present disclosure, the location information fed back in operation S150 is not particular limited thereto. In some implementations, the location information may include at least one of following information: a port index of the sampled information on the initial channel information; a data stream index of the sampled information on the initial channel information; a subcarrier index of the sampled information on the initial channel information; a physical resource block index of the sampled information on the initial channel information; a time-domain sample point index of the sampled information on the initial channel information; or a beam of the sampled information on the initial channel information.

Certainly, in the present disclosure, a type of the location information fed back may be determined according to a type of the check information fed back.

If the sampled information for generating the check information is information obtained by sampling the initial channel information on at least one port, the location information is the port index of the sampled information on the initial channel information; if the sampled information for generating the check information is information obtained by sampling the initial channel information on at least one data stream, the location information is the data stream index of the sampled information on the initial channel information; if the sampled information for generating the check information is information obtained by sampling the initial channel information on at least one subcarrier, the location information is the subcarrier index of the sampled information on the initial channel information; if the sampled information for generating the check information is information obtained by sampling the initial channel information on at least one physical resource block, the location information is the time-domain sample point index of the sampled information on the initial channel information; if the sampled information for generating the check information is information obtained by sampling the initial channel information on at least one beam, the location information is the beam of the sampled information on the initial channel information.

In the present disclosure, how the terminal feeds back the check information is not particularly limited thereto. In some implementations, the terminal may feed the check information back through an uplink physical control channel. Accordingly, the base station may receive the check information on the uplink physical control channel. In some implementations, the terminal may feed the check information back through a high layer signaling, and accordingly, the base station may receive the check information through the high layer signaling.

The base station may evaluate the performance of the processing manner for processing the initial channel information according to the check information, and send a network performance identifier to the terminal according to the performance. Accordingly, as shown in Fig. 5, the method for feeding back channel state information may further include following operations S170 and S180.

At operation S170, receiving a network performance identifier.

At operation S180, determining a feedback type of the channel state information according to the network performance identifier.

In some implementations, the network performance identifier carries the first-type codebook (indicating that the first-type codebook is suitable for the current application scenario). Accordingly, at operation S180, performing processing on the initial channel information received subsequently according to the first-type codebook, and obtaining the first type codebook information to be fed back.

In some implementations, the network performance identifier carries the second-type codebook (the second-type codebook may be a related codebook, indicates that an encoding mode according to the related codebook is suitable for the current application scenario). Accordingly, at operation S180, performing processing on the initial channel information received subsequently according to the second-type codebook, and obtaining the channel state information to be fed back.

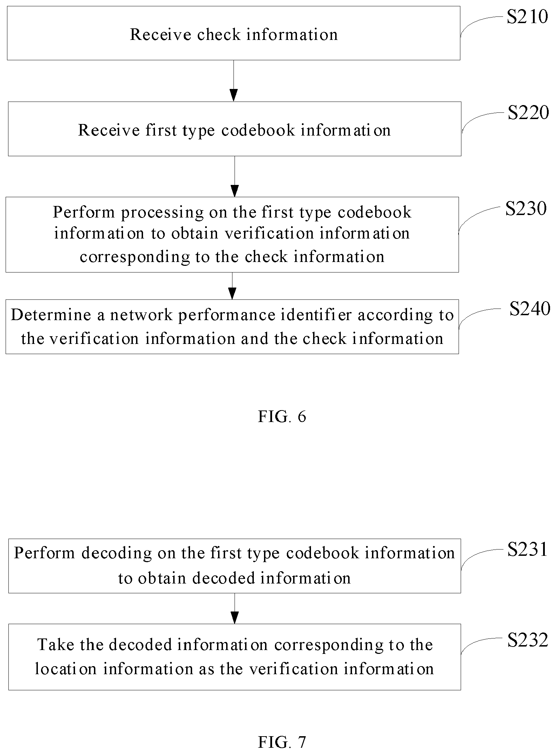

As a second aspect of the present disclosure, there is provided a method for processing feedback information, and as shown in Fig. 6, the method includes following operations S210 to S240.

At operation S210, receiving check information.

At operation S220, receiving first type codebook information.

At operation S230, performing processing on the first type codebook information to obtain verification information corresponding to the check information.

At operation S240, determining a network performance identifier according to the verification information and the check information.

The check information described herein is a part of the feedback information, and the first type codebook information is another part of the feedback information. The base station may obtain the first type codebook information and the check information, the first type codebook information is obtained by encoding the initial channel information with the first-type codebook. The check information may be check information determined by the terminal according to the method for feeding back channel state information provided in the first aspect of the present disclosure. Moreover, the base station may determine information corresponding to the sampled information (for convenience of description, the information may be referred to as verification information) in a processing result obtained by processing the received channel state information. Then, the base station compares the verification information with the check information, and can obtain the network performance identifier. The network performance identifier may carry codebook information adapted to the current application scenario.

If a similarity between the verification information and the check information is relatively high (or a distance between the verification information and the check information is relatively small), it indicates that encoding the initial channel information by using the first-type codebook at the terminal can meet the current application scenario, and in this case, the network performance identifier carries the first type codebook information. If the similarity between the verification information and the check information is relatively low (or the distance therebetween is relatively large), it indicates that encoding the initial channel information by using the first-type codebook at the terminal cannot meet the current application scenario, and in this case, the network performance identifier carries another codebook information different from the first-type codebook.

If the base station determines that the codebook used for encoding the initial channel information at the terminal cannot meet the current application scenario, the base station may send the network performance identifier to the terminal to remind the terminal to replace the codebook for encoding the initial channel information. That is, through the method for feeding back channel state information and the method for processing feedback information provided in the present disclosure, the terminal can select a processing mode suitable for the current application scenario to encode the initial channel information and feed the encoded initial channel information back to the base station, and finally the communication system can maintain relatively high performance.

As described above, in the present disclosure, how the base station determines the verification information corresponding to the check information is not particularly limited. In some implementations, the terminal may agree with the base station on a location of the verification information in the decoded initial channel information before feeding back the check information.

In some implementations, the terminal may further feed location information of the check information back to the base station. Accordingly, the method for processing feedback information may further include: receiving location information of the check information.

In the implementations, the check information includes the sampled information, and the location information is location information of the sampled information. Accordingly, as shown in Fig. 7, operation S230 may include following operations S231 and S232.

At operation S231, performing decoding on the first type codebook information to obtain decoded information.

At operation S232, taking the decoded information corresponding to the location information as the verification information.

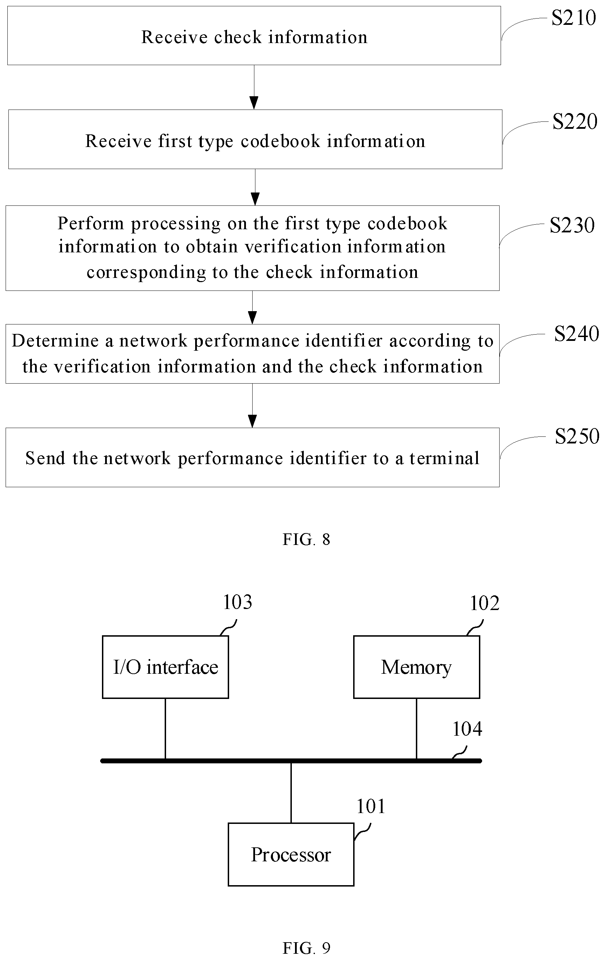

In order to facilitate the terminal to know an evaluation result of the base station on the codebook used by the terminal in time, in some implementations, as shown in Fig. 8, the method for processing feedback information may further include following operation S250.

At operation S250, sending the network performance identifier to the terminal.

In the present disclosure, how to specifically perform operation S240 is not particularly limited. In some implementations, the verification information and the check information are both matrices. In operation S240, the verification information and the verification information is compared to obtain the similarity therebetween, and the network performance identifier may also carry information representing the similarity between the verification information and the check information. In such case, if the similarity is greater than a preset value, the network performance identifier may carry information representing that the first-type codebook used by the terminal is adapted to the current application scenario, and if the similarity is less than the preset value, the network performance identifier may carry information representing that the first-type codebook used by the terminal is not adapted to the current application scenario, and therefore, the network performance identifier may also serve as the reminding information.

In the present disclosure, the similarity between the two matrixes of the verification information and the check information includes, but is not limited to, a cosine similarity, correlation, and the like of the two matrices. A distance between two matrices includes, but is not limited to, a minimum mean square error of the two matrices, a L1 norm of a difference between the two matrices, a L2 norm of a difference between the two matrices, a Lp norm of a difference between the two matrices, a column norm of the difference between the two matrices, a row norm of the difference between the two matrices, a spectral norm of a difference between the two matrices.

It should be noted that, in some implementations, the first type codebook information sent by the terminal is the channel state information.

The network performance identifier is sent to the terminal, so that the terminal can determine the feedback type of the channel state information according to the network performance identifier.

In order to correspond to an encoder including a neural network, in the present disclosure, the channel state information is decoded by the decoder provided in the base station. However, a specific structure of the decoder is not particularly limited in the disclosure. For example, the decoder includes a decompression module and a second processing module, the second processing module may be a sub-neural network including L network layers, the i-th layer may be a convolutional layer, a pooling layer, a fully connected layer, or a combination of the above network layers, or a residual network block or a denseblock composed of several convolutional layers. The decompression module may include a fully connected layer, C2 deconvolution layers (such as upsampling layers, transposed convolution layers, and combinations thereof with various resblocks, denseblocks, convolution layers), LSTM, GRU. In some implementations, the channel state information may be also quantized, encoded, and modulated to be transmitted to the base station. The base station may dequantize, demodulate, and decode the channel state information as an input of the decoder after receiving the channel state information, and the decoder outputs the channel information.

As a third aspect of the present disclosure, there is provided a terminal, and as shown in Fig. 9, the terminal includes: at least one processor 101 (only one shown in Fig. 9); a memory 102 having at least one computer program stored thereon, the at least one computer program, executed by the at least one processor 101, causes the at least one processor 101 to implement the method for feeding back channel state information provided in the first aspect of the present disclosure; and at least one I/O interface 103 connected between the processor 101 and the memory 102, and configured to implement information interaction between the processor 101 and the memory 102.

The processor 101 is a device having a capability of processing data, includes, but is not limited to, a Central Processing Unit (CPU), and the like; the memory 102 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface 103 is connected between the processor 101 and the memory 102, and can implement information interaction between the processor 101 and the memory 102, includes, but is not limited to, a data Bus, and the like.

In some implementations, the processor 101, the memory 102, and the I/O interface 103 are connected together through a bus, and are further connected to other components of a computing device.

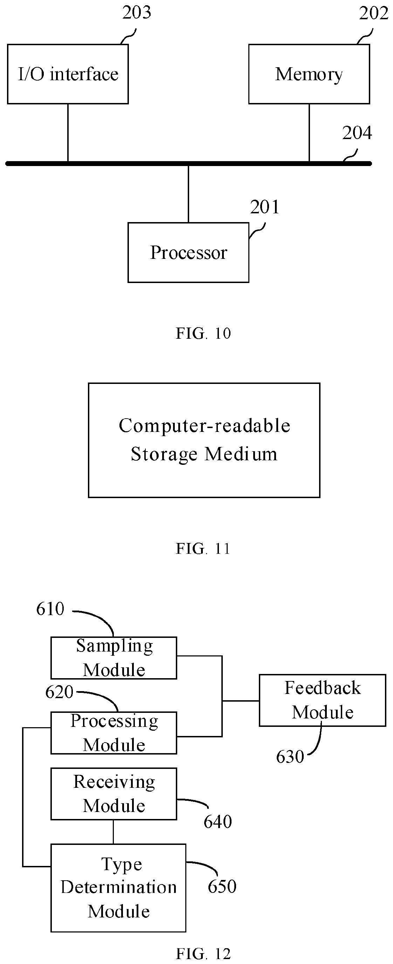

As a fourth aspect of the present disclosure, there is provided a base station, and as shown in Fig. 10, the base station includes: at least one processor 201 (only one shown in Fig. 10); a memory 202 having at least one computer program stored thereon, the at least one computer program, executed by the at least one processor 201, causes the at least one processor 201 to implement the method for processing feedback information provided in the second aspect of the present disclosure; and at least one I/O interface 203 connected between the processor 201 and the memory 202, and configured to implement information interaction between the processor 201 and the memory 202.

The processor 201 is a device having a capability of processing data, includes, but is not limited to, a Central Processing Unit (CPU), and the like; the memory 202 is a device having a capability of storing data, includes, but is not limited to, a random access memory (RAM, in particular, SDRAM, DDR, and the like), a read only memory (ROM), an electrically erasable programmable read only memory (EEPROM), and a FLASH; the I/O interface 203 is connected between the processor 201 and the memory 202, and can implement information interaction between the processor 201 and the memory 202, includes, but is not limited to, a data Bus, and the like.

In some implementations, the processor 201, the memory 202, and the I/O interface 203 are connected together through a bus, and are further connected to other components of a computing device.

As a fifth aspect of the present disclosure, as shown in Fig. 11, there is provided a computer readable storage medium having a computer program stored thereon, the computer program, executed by a processor, causes the processor to perform at least one of followings: the method for feeding back channel state information according to the first aspect of the present disclosure; or the method for processing feedback information according to the second aspect of the present disclosure.

As a sixth aspect of the present disclosure, there is provided a terminal, and as shown in Fig. 12, the terminal includes a sampling module 610 and a feedback module 630.

The sampling module 610 is configured to perform sampling on initial channel information to obtain check information.

The feedback module 630 is configured to feed the check information back.

The terminal is configured to execute the method for feeding back channel state information provided in the first aspect of the present disclosure, and the operation principle and the beneficial effects of the method for feeding back channel state information are described in detail above, and are not repeated herein.

In some implementations, the terminal may further include an initial information processing module 620 configured to acquire first type codebook information according to the initial channel information.

Accordingly, the feedback module 630 is further configured to feed the first type codebook information back.

In some implementations, the feedback module 630 is configured to: perform joint encoding on the check information and the first type codebook information in the same coding block to obtain joint encoded information; and feed the joint encoded information back.

In some implementations, a feedback priority of the feedback module 630 feeding back the check information is not higher than a feedback priority of the feedback module 630 feeding back the first type codebook information.

In some implementations, the feedback module 630 feeds back the check information according to a first period, and feeds back the first type codebook information according to a second period, the second period being less than the first period.

In some implementations, the sampling module 610 is configured to perform at least one of: perform sampling on the initial channel information at a port; perform sampling on the initial channel information at a data stream; perform sampling on the initial channel information at a subcarrier; perform sampling on the initial channel information at a physical resource block; perform sampling on the initial channel information at a time-domain sample point; or perform sampling on the initial channel information at a beam.

In some implementations, the sampling module 610 is configured to perform sampling on the initial channel information to obtain sampled information; and obtain the check information according to the sampled information.

In some implementations, the feedback module 630 is further configured to: obtain location information corresponding to the check information; and feed the location information back.

In some implementations, the feedback module 630 feeds back the check information through a physical control channel or a high layer signaling.

In some implementations, the terminal may further include a first receiving module 640 and a type determination module 650.

The first receiving module 640 is configured to receive a network performance identifier.

The type determination module 650 is configured to determine a feedback type of the channel state information according to the network performance identifier.

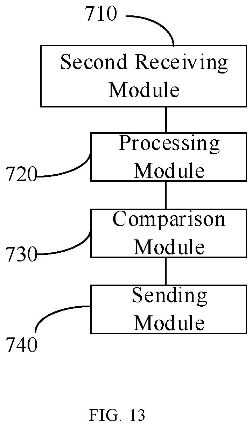

As a seventh aspect of the present disclosure, there is provided a base station, and as shown in Fig. 13, the base station includes a second receiving module 710, a processing module 720, and a comparison module 730.

The second receiving module 710 is configured to receive check information and first type codebook information.

The processing module 720 is configured to perform processing on the first type codebook information to obtain verification information corresponding to the check information.

The comparison module 730 is configured to determine a network performance identifier according to the verification information and the check information.

The base station is configured to execute the method for processing feedback information provided in the second aspect of the present disclosure, and the operation principle and the beneficial effects of the processing method are described in detail above, and are not repeated herein.

In some implementations, the second receiving module 710 is configured to receive location information of the check information.

In some implementations, the processing module 720 is configured to perform decoding on the first type codebook information to obtain decoded information; and take the decoded information corresponding to the location information as the verification information.

In some implementations, the base station further includes a sending module 740.

The sending module 740 is configured to send the network performance identifier to a terminal.

In some implementations, the sending module 740 is further configured to send the network performance identifier to the terminal, so that the terminal determines a feedback type of channel state information according to the network performance identifier.

Example one

In the example, the sampled information is a mapping of the initial channel information on at least one port (i.e., the sampled information is information obtained by sampling the initial channel information on at least one port).

In the example, the sampled information is a value of the initial channel information H at a certain transmitting antenna. The location information of the sampled information is a subset Tx of antenna indexes.

The terminal selects the subset Tx of transmit antenna indexes, for example, Tx is a subset of 1 to Nt with K1 elements, and the least antenna indexes, e.g., from 1 to K1, may be selected as the K1 elements, or, the greatest antenna indexes, e.g., (Nt-K1+1) to Nt, may be selected as the K1 elements, the antenna indexes in the middle may be selected as the K1 elements, or the antenna indexes corresponding to the greatest received power may be selected as the K1 elements. The channel information corresponding to the Tx on the initial channel information H is selected as the sampled information. For example, if K1=1, a value of the initial channel information H on a first antenna may be selected as the sampled information. K1 is a positive integer.

The sampled information and the subset Tx of the transmit antenna indexes are fed back. The subset Tx of the transmit antenna index is the location information of the sampled information.

Example two

In the example, the sampled information is a mapping of the initial channel information on at least one port (i.e., the sampled information is information obtained by sampling the initial channel information on at least one port).

In the example, the sampled information is a value of the initial channel information H on a certain receiving antenna. The location information of the sampled information is a subset Rx of antenna indexes.

The terminal selects the subset Rx of receiving antenna indexes, for example, Rx is a subset of 1 to Nr, the number of elements in the subset is K2. The least antenna indexes (e.g., 1 to K2) may be K2 elements in the subset, the greatest antenna indexes (e.g., (Nt-K2+1) to Nt values) may be K2 elements in the subset, the antenna indexes in the middle may be K2 elements in the subset, or the antenna indexes with the greatest received power may be K2 elements in the subset, and the like. The channel information corresponding to the Rx on the initial channel information H is selected as the sampled information. For example, if K2=1, a value of the initial channel information H on a first receiving antenna may be selected as the sampled information. K2 is a positive integer.

The sampled information and the subset Rx of the receiving antenna indexes are fed back. The subset Rx of the receiving antenna indexes is the location information of the sampled information.

Example three

In the example, the channel information corresponding to the subset Rx of the receiving antenna indexes and the subset Tx of the transmit antenna indexes are selected as the sampled information.

It should be noted that, in the above examples one to three, the indexes of the antennas may also start from 0 instead of 1, and then the corresponding sampled information may be obtained similarly.

Example four

A case where the sampled information is a mapping of initial channel information on at least one data stream is described in the example (i.e., the sampled information is information obtained by sampling the initial channel information on at least one data stream).

The terminal selects a subset S of data streams, i.e., K3 elements (such as, a first data stream, a second data stream, a last data stream, and a data stream with a greatest signal-to-noise ratio) from Ns data streams, and obtains the channel information corresponding to the subset S as the sampled information, K3 is a positive integer, and in some implementations, K3=1.

The sampled information and the subset S of the data streams are fed back. The subset S of the data streams is location information of the sampled information.

It should be noted that an index of the data stream may also start with 0 instead of 1, and then the corresponding sampled information may be obtained similarly.

The data stream may also be referred to herein as a layer, a codeword, or a channel rank, and the like.

Example Five

A case where the sampled information is a mapping of initial channel information on at least one subcarrier is described in the example (i.e., the sampled information is information obtained by sampling the initial channel information on at least one subcarrier).

The terminal selects a subset C of subcarriers, i.e., K4 elements of Nc subcarriers, for example, K4 elements (e.g., 1 to K4) with the least subcarrier indexes, K4 elements (e.g., Nt-K4+1 to Nc) with the greatest antenna indexes, K4 elements with the antenna indexes in the middle, or K4 elements with the greatest received power, and the like. The corresponding channel information on the subset C is acquired as the sampled information, K4 is a positive integer, and in some implementations, K4=1.

The sampled information and the subset C of the subcarriers are fed back. The subset C of the subcarriers is location information of the sampled information.

It should be noted that an index of the subcarrier may also start with 0 instead of 1, and then the corresponding sampled information may be obtained similarly.

The subcarriers may be replaced by physical resource blocks, i.e., only one channel matrix is provided on each physical resource block, or may be replaced by sub-bands, i.e., the channel matrix finds a correlation matrix within a sub-band range and obtains eigenvectors (matrices) of the correlation matrix

Example six

A case where the sampled information is a mapping of initial channel information on at least one time-domain sample point is described in the example (i.e., the sampled information is information obtained by sampling at least one time-domain sample point of the initial channel information).

The terminal selects a subset T of time-domain sample points, i.e., K5 elements from Nk time-domain sample points, such as K5 elements with the least time-domain sample point indexes (e.g., 1 to K5), K5 elements with the greatest time-domain sample point indexes (e.g., Nt-K5+1 to Nc), K5 elements with the time-domain sample point indexes in the middle, or K5 elements with the greatest received power, etc. The channel information corresponding to the subset T of the time-domain sample point indexes is acquired as the sampled information, K5 is a positive integer, and in some implementations, K5=1.

The sampled information and the subset T of the time-domain sample points are fed back. The subset T of the time-domain sample points is location information of the sampled information.

It should be noted that an index of the time-domain sample point may also start with 0 instead of 1, and then the corresponding sampled information may be obtained similarly.

Example seven

A case where the sampled information is a mapping of initial channel information on at least one beam is described in the example (i.e., the sampled information is information obtained by sampling at least one beam of the initial channel information).

The terminal obtains L beams most matched with channel information HP on each sub-band according to the obtained channel information HP, the beam may be a DFT vector, or a Kronecker product of two or more DFT vectors. The DFT vector can be expressed as:

$$u_m = \left[ 1, e^{j\frac{2\pi m}{O_2 N_2}}, \cdots, e^{j\frac{2\pi m(N_2-1)}{O_2 N_2}} \right], v_n = \left[ 1, e^{j\frac{2\pi n}{O_1 N_1}}, \cdots, e^{j\frac{2\pi n(N_1-1)}{O_1 N_1}} \right].$$

$N_1$, $O_1$, $N_2$, and $O_2$ are respectively the number of transmit antennas and an oversampling factor in antenna dimension 1, and the number of transmit antennas and an oversampling factor in antenna dimension 2, and are configured by a high layer signaling. $u_m, v_n$ are an m-th beam in the antenna dimension 2, and an n-th beam in the antenna dimension 1, respectively, $m = 0, \cdots, N_2 O_2, n = 0, \cdots, N_1 O_1$. A final DFT vector is a Kronecker product of the DFT vectors. If N1=1, a value of $v_n$ is 1, if N2=1, a value of $u_m$ is 1.

The sampled information is a vector formed by L beams. For example, a Single-Panel Codebook, a Type I Multi-Panel Codebook, a Type II Codebook, a Type II Port Selection Codebook, an Enhanced Type II Codebook, an Enhanced Type II Port Selection Codebook.

The sampled information and the beam indexes of the L beams are fed back. The beam indexes of the L beams are location information of the sampled information.

It should be understood by those of ordinary skill in the art that all or some of the operations in the method, the functional modules/components in the apparatuses applied above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be allocated on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read-Only Memory (CD-ROM), a Digital Video Disk (DVD) or other optical discs, magnetic cassettes, magnetic tapes, magnetic disks or other magnetic storage devices, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The present disclosure applies the exemplary embodiments, and although specific terms are employed, they are used and should only be interpreted in a generic and descriptive meaning and not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

**Claims**

1. A method for feeding back channel state information, comprising:

   performing sampling on initial channel information to obtain check information; and
   feeding back the check information.

2. The method of claim 1, further comprising:

   acquiring first type codebook information according to the initial channel information; and
   feeding back the first type codebook information.

3. The method of claim 2, wherein,

   performing joint encoding on the check information and the first type codebook information in a same coding block to obtain joint encoded information; and
   feeding back the joint encoded information.

4. The method of claim 2, wherein a feedback priority of the check information is not higher than a feedback priority of the first type codebook information.

5. The method of claim 2, wherein the check information is fed back according to a first period, and the first type codebook information is fed back according to a second period, the second period being less than the first period.

6. The method of any of claims 1 to 5, wherein the performing sampling on initial channel information comprises at least one of:

   performing sampling on the initial channel information at a port;
   performing sampling on the initial channel information at a data stream;
   performing sampling on the initial channel information at a subcarrier;

performing sampling on the initial channel information at a physical resource block;
performing sampling on the initial channel information at a time-domain sample point; or
performing sampling on the initial channel information at a beam.

7. The method of any of claims 1 to 5, wherein the performing sampling on initial channel information to obtain check information comprises:

performing sampling on the initial channel information to obtain sampled information; and
obtaining the check information according to the sampled information.

8. The method of claim 7, wherein the obtaining the check information according to the sampled information comprises at least one of:

the check information corresponding to the sampled information of the initial channel information on at least one port;
the check information corresponding to the sampled information of the initial channel information on at least one data stream;
the check information corresponding to the sampled information of the initial channel information on at least one subcarrier;
the check information corresponding to the sampled information on of the initial channel information at least one physical resource block;
the check information corresponding to the sampled information of the initial channel information on at least one time-domain sample point; or
the check information corresponding to the sampled information of the initial channel information on at least one beam.

9. The method of claim 7, further comprising:

obtaining location information corresponding to the check information; and
feeding back the location information.

10. The method of claim 9, wherein the location information comprises at least one of:

a port index of the sampled information at the initial channel information;
a data stream index of the sampled information at the initial channel information;
a subcarrier index of the sampled information at the initial channel information;
a physical resource block index of the sampled information at the initial channel information;
a time-domain sample point index of the sampled information at the initial channel information; or
a beam of the sampled information at the initial channel information.

11. The method of any of claims 1 to 5, wherein the check information is fed back through a physical control channel or a high layer signaling.

12. The method of any of claims 1 to 5, further comprising:

receiving a network performance identifier; and
determining a feedback type of the channel state information according to the network performance identifier.

13. The method of claim 12, wherein the network performance identifier is indicated as a first-type codebook, and the feedback type of the channel state information is determined to be the first-type codebook; or
the network performance identifier is indicated as a second-type codebook, and the feedback type of the channel state information is determined to be the second-type codebook.

14. A method for processing feedback information, comprising:

receiving check information;
receiving first type codebook information;
performing processing on the first type codebook information to obtain verification information corresponding to the check information; and

determining a network performance identifier according to the verification information and the check information.

15. The method of claim 14, further comprising:

receiving location information of the check information;

the performing processing on the first type codebook information to obtain verification information corresponding to the check information comprises:

performing decoding on the first type codebook information to obtain decoded information; and

taking the decoded information corresponding to the location information as the verification information.

16. The method of claim 14 or 15, further comprising:

sending the network performance identifier to a terminal.

17. The method of claim 16, wherein the network performance identifier carries a type of codebook determined according to the check information and the verification information.

18. A terminal, comprising:

at least one processor;

a memory having at least one computer program stored thereon, the at least one computer program, executed by the at least one processor, causes the at least one processor to implement the method for feeding back channel state information according to any of claims 1 to 13; and

at least one I/O interface connected between the processor and the memory, and configured to implement information interaction between the processor and the memory.

19. A base station, comprising:

at least one processor;

a memory having at least one computer program stored thereon, the at least one computer program, executed by the at least one processor, causes the at least one processor to implement the method for processing feedback information according to any of claims 14 to 17; and

at least one I/O interface connected between the processor and the memory, and configured to implement information interaction between the processor and the memory.

20. A computer-readable storage medium having a computer program stored thereon, the computer program, executed by a processor, causes the processor to perform at least one of followings:

the method for feeding back channel state information according to any of claims 1 to 13; or

the method for processing feedback information according to any of claims 14 to 17.

Perform sampling on initial channel information to obtain check information — S110

Feed back the check information — S120

FIG. 1

Encoder

First Processing Module
110

Compression Module
120

Channel

Decoder

Decompression Module
210

Second Processing Module
220

FIG. 2

Perform sampling on initial channel information to obtain check information — S110

Feed back the check information — S120

Acquire first type codebook information according to the initial channel information — S130

Feed back the first type codebook information — S140

FIG. 3

Perform sampling on the initial channel information to obtain sampled information — S111

Obtain the check information according to the sampled information — S112

FIG. 4

| Perform sampling on the initial channel information to obtain sampled information | — S111 |

— S110

| Obtain the check information according to the sampled information | — S112 |

| Feed back the check information | — S120 |

| Acquire first type codebook information according to the initial channel information | — S130 |

| Feed back the first type codebook information | — S140 |

| Obtain location information corresponding to the check information | — S150 |

| Feed back the location information | — S160 |

| Receive a network performance identifier | — S170 |

| Determine a feedback type of the channel state information according to the network performance identifier | — S180 |

FIG. 5

```
┌─────────────────────────────────────────────────┐
│         Receive check information               │ ⟋ S210
└─────────────────────────────────────────────────┘
                        │
                        ▼
┌─────────────────────────────────────────────────┐
│      Receive first type codebook information    │ ⟋ S220
└─────────────────────────────────────────────────┘
                        │
                        ▼
┌─────────────────────────────────────────────────┐
│    Perform processing on the first type codebook│ ⟋ S230
│    information to obtain verification information│
│      corresponding to the check information     │
└─────────────────────────────────────────────────┘
                        │
                        ▼
┌─────────────────────────────────────────────────┐
│  Determine a network performance identifier     │ ⟋ S240
│  according to                                   │
│  the verification information and the check     │
│  information                                    │
└─────────────────────────────────────────────────┘
```

FIG. 6

```
┌─────────────────────────────────────────────────┐
│  Perform decoding on the first type codebook    │ ⟋ S231
│  information                                     │
│         to obtain decoded information           │
└─────────────────────────────────────────────────┘
                        │
                        ▼
┌─────────────────────────────────────────────────┐
│    Take the decoded information corresponding   │ ⟋ S232
│    to the                                       │
│  location information as the verification       │
│  information                                    │
└─────────────────────────────────────────────────┘
```

FIG. 7

Receive check information — S210

Receive first type codebook information — S220

Perform processing on the first type codebook information to obtain verification information corresponding to the check information — S230

Determine a network performance identifier according to the verification information and the check information — S240

Send the network performance identifier to a terminal — S250

FIG. 8

103

102

I/O interface

Memory

104

101

Processor

FIG. 9

FIG. 10

FIG. 11

FIG. 12

710

Second Receiving
Module

Processing
Module

720

Comparison
Module

730

Sending
Module

740

FIG. 13

<div align="center">

**INTERNATIONAL SEARCH REPORT**

</div>

| | International application No. |
|---|---|
| | **PCT/CN2022/117221** |

| **A.** | **CLASSIFICATION OF SUBJECT MATTER** |
|---|---|

H04B 7/06(2006.01)i

According to International Patent Classification (IPC) or to both national classification and IPC

| **B.** | **FIELDS SEARCHED** |
|---|---|

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNTXT; CNKI; VEN; ENTXTC: 信道状态, 反馈, 采样, 校验, 验证, 码本, 更新, 适应, 场景, CSI, feedback, sample, check, verificat+, verify, codebook, update

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 109391301 A (CHINA ACADEMY OF TELECOMMUNICATIONS TECHNOLOGY) 26 February 2019 (2019-02-26) description, paragraphs [0178]-[0242] | 1-20 |
| A | CN 111740807 A (HUAWEI TECHNOLOGIES CO., LTD.) 02 October 2020 (2020-10-02) entire document | 1-20 |
| A | CN 110249546 A (TELEFONAKTIEBOLAGET LM ERICSSON (PUBL)) 17 September 2019 (2019-09-17) entire document | 1-20 |
| A | CN 104144007 A (CHINA ACADEMY OF TELECOMMUNICATIONS TECHNOLOGY) 12 November 2014 (2014-11-12) entire document | 1-20 |
| A | CN 106685582 A (ZTE CORP.) 17 May 2017 (2017-05-17) entire document | 1-20 |
| A | CN 104184506 A (BEIJING SAMSUNG TELECOM R&D CENTER et al.) 03 December 2014 (2014-12-03) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 November 2022** | **29 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117221**

| Patent document cited in search report | | | Publication date (day/month/year) | Patent family member(s) | | | Publication date (day/month/year) |
|---|---|---|---|---|---|---|---|
| CN | 109391301 | A | 26 February 2019 | KR | 20220011809 | A | 28 January 2022 |
| | | | | US | 2020204225 | A1 | 25 June 2020 |
| | | | | JP | 2020530715 | A | 22 October 2020 |
| | | | | EP | 3667937 | A1 | 17 June 2020 |
| | | | | WO | 2019029311 | A1 | 14 February 2019 |
| | | | | TW | 201911774 | A | 16 March 2019 |
| | | | | KR | 20200038288 | A | 10 April 2020 |
| CN | 111740807 | A | 02 October 2020 | CN | 107005365 | A | 01 August 2017 |
| | | | | US | 2018132265 | A1 | 10 May 2018 |
| | | | | BR | 112018002157 | A2 | 18 September 2018 |
| | | | | EP | 3309986 | A1 | 18 April 2018 |
| | | | | WO | 2017024532 | A1 | 16 February 2017 |
| | | | | EP | 3764574 | A1 | 13 January 2021 |
| | | | | JP | 2018530201 | A | 11 October 2018 |
| CN | 110249546 | A | 17 September 2019 | WO | 2018145757 | A1 | 16 August 2018 |
| | | | | US | 2018302129 | A1 | 18 October 2018 |
| | | | | EP | 3384610 | A1 | 10 October 2018 |
| CN | 104144007 | A | 12 November 2014 | WO | 2014180319 | A1 | 13 November 2014 |
| CN | 106685582 | A | 17 May 2017 | WO | 2017076323 | A1 | 11 May 2017 |
| CN | 104184506 | A | 03 December 2014 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111043416